# EUROPÄISCHE PATENTANMELDUNG

(11) **EP 4 544 964 A1**
(43) Veröffentlichungstag der Anmeldung: **30.04.2025**
(21) Anmeldenummer: 23205627.5
(22) Anmeldetag: 24.10.2023
(51) Int. Cl.: A47G 19/22, A47G 23/16, G01G 19/40, G01G 17/04, G01G 19/414, A47G 23/03, A47G 23/14

(54) **VERFAHREN ZUR ANSTEUERUNG EINER AUSGABEVORRICHTUNG IN EINEM TRINKASSISTENZSYSTEM UND TRINKASSISTENZSYSTEM**

(71) Anmelder: Kneer, Annette, 88521 Ertingen (DE)
(72) Erfinder: Kneer, Annette, 88521 Ertingen (DE)
(74) Vertreter: Isarpatent

(57) **Zusammenfassung**

Die vorliegende Erfindung betrifft ein Verfahren zur Ansteuerung einer Ausgabevorrichtung in einem Trinkassistenzsystem, mit den folgenden Schritten: Erkennen eines an einem Trinkgefäß angebrachten Identifikationselements mittels einer Identifikationseinrichtung; Wiederholtes Wägen des Trinkgefäßes mittels einer Wägeeinrichtung zur Erfassung eines Gewichts eines in dem Trinkgefäß aufgenommenen Getränks; Ermitteln einer Trinkmenge aus aufgezeichneten Veränderungen des Gewichts und/oder einer Differenz zu einer dem Identifikationselement zugeordneten vorbestimmten Sollmenge mittels einer Auswerteeinrichtung; und Ausgeben einer Trinkmotivation durch eine Ausgabeeinrichtung basierend auf der Differenz. Die vorliegende Erfindung betrifft ferner ein Trinkassistenzsystem, insbesondere zur Durchführung eines Verfahrens.

## Beschreibung

### GEBIET DER ERFINDUNG

Die vorliegende Erfindung betrifft ein Verfahren zur Ansteuerung einer Ausgabevorrichtung in einem Trinkassistenzsystem. Die vorliegende Erfindung betrifft ferner ein entsprechendes Trinkassistenzsystem, insbesondere zur Durchführung eines derartigen Verfahrens.

### TECHNISCHER HINTERGRUND

Oftmals fällt es Menschen, insbesondere pflegebedürftigen oder älteren Menschen, schwer, ausreichend zu trinken. Da ausreichend Flüssigkeit für den Gesundheitszustand unerlässlich ist, kann sich die fehlende Flüssigkeit schnell negativ auf den Gesundheitszustand auswirken.

Nachteilig sind pflegebedürftige oder ältere Menschen oftmals über längere Zeiträume allein oder unbeaufsichtigt, sodass eine Kontrolle einer getrunkenen Flüssigkeitsmenge schwer fällt. Dies betrifft zum einen die Situation, wenn sich eine ältere Person alleine zu Hause aufhält, sowie ebenso die Situation, wenn eine Person in einem Pflegeheim lebt. Auch für das Pflegepersonal ist es bei der Vielzahl an Bewohnern schwierig zu überprüfen, wie viel Flüssigkeit der jeweilige Bewohner an einem Tag, an mehreren Tagen oder beispielsweise auch in einer Woche zu sich genommen hat.

Bisweilen existieren als Hilfsmittel beispielsweise sogenannte Trinkuhren, durch die durch wiederholtes Tonsignal in gewissen Zeitabständen darauf hinweisen, ausreichend zu trinken. Durch das Tonsignal soll die Person daran erinnern werden, ein Glas in die Hand zu nehmen und daraus Flüssigkeit zu sich zu nehmen. Nachteilig erfolgt hierbei jedoch keine Kontrolle der tatsächlich getrunkenen Menge.

Dies ist ein Zustand, den es zu verbessern gilt.

### ZUSAMMENFASSUNG DER ERFINDUNG

Vor diesem Hintergrund liegt der vorliegenden Erfindung die Aufgabe zugrunde, eine Möglichkeit anzugeben, die Trinkaktivität besser zu kontrollieren.

Erfindungsgemäß wird diese Aufgabe durch ein Verfahren mit den Merkmalen des Patentanspruchs 1 und/oder durch ein Trinkassistenzsystem mit den Merkmalen des Patentanspruchs 10 gelöst.

### Demgemäß ist vorgesehen:

Ein Verfahren zur Ansteuerung einer Ausgabevorrichtung in einem Trinkassistenzsystem, mit den folgenden Schritten: Erkennen eines an einem Trinkgefäß angebrachten Identifikationselements mittels einer Identifikationseinrichtung; Wiederholtes Wägen des Trinkgefäßes mittels einer Wägeeinrichtung zur Erfassung eines Gewichts eines in dem Trinkgefäß aufgenommenen Getränks; Ermitteln einer Trinkmenge aus aufgezeichneten Veränderungen des Gewichts und/oder einer Differenz zu einer dem Identifikationselement zugeordneten vorbestimmten Sollmenge mittels einer Auswerteeinrichtung und Ausgeben einer Trinkmotivation durch eine Ausgabeeinrichtung basierend auf der Differenz.

Ein Trinkassistenzsystem, insbesondere zur Durchführung eines erfindungsgemäßen Verfahrens, mit: einer Identifikationsvorrichtung, die zur Erkennung eines an ein Trinkgefäß anbringbaren Identifikationselements ausgebildet ist; einer Wägeeinrichtung, die zur Erfassung eines Gewichts eines in dem Trinkgefäß aufgenommenen Getränks ausgebildet ist; einer Speichereinrichtung, die zum Aufzeichnen der Veränderung des Gewichts des in dem Trinkgefäß aufgenommenen Getränks ausgebildet ist; einer Auswerteeinrichtung, in der mehreren Kategorien hinterlegt sind, wobei eine individuell getrunkene Menge mit Zeitangabe abgelegt ist.

Die der vorliegenden Erfindung zugrundeliegende Erkenntnis besteht darin, dass die tatsächlich aus einem Gefäß getrunkene Menge durch wägen ermittelt werden kann, um daraus auf eine erfolge Flüssigkeitszufuhr einer Person Rückschlüsse zu ziehen.

Die der vorliegenden Erfindung zugrundeliegende Idee besteht darin, das Gewicht eines Trinkgefäßes zu messen bzw. zu wiegen und dabei die Flüssigkeitsmenge in Relation zu einer Flüssigkeitsmenge eines Trinkzieles auszuwerten. In einer Ausführungsform kann ein Trinkgefäß einmal auf der Wägeeinrichtung abgestellt werden, wobei dies bedeutet: "Diese Menge wird getrunken."

In einer weiteren Ausführungsform kann das Gewicht des Trinkgefäßes zwischen den Trinkvorgängen oder auch lediglich am Anfang und am Ende eines Tages gemessen werden, wobei daraus auf eine getrunkene Menge rückgeschlossen werden kann. In einer Ausführung kann das Trinkgefäß am Anfang gemessen werden, wobei die Menge in dem Trinkgefäß gewogen wird. Bis das Trinkgefäß geleert ist können unterschiedliche Trinkmotivationen akustisch und/oder visuell abgegeben werden, um eine Person zu motivieren, aus dem Trinkgefäß zu trinken. Durch Ausgeben einer Trinkmotivation durch eine Ausgabeeinrichtung, welche beispielsweise akustisch oder optisch erfolgt, kann die Person weiterhin motiviert werden, Flüssigkeit zu sich zu nehmen. Folglich kann durch das Verfahren sowie durch das Trinkassistenzsystem eine Person dazu animiert werden, über den Tag verteilt mehr Flüssigkeit zu sich zu nehmen, auch wenn die Person nicht von einer anderen Person beaufsichtigt werden kann. Des Weiteren können Informationen über die Flüssigkeitszufuhr bei Kontrollen durch medizinisches Personal wichtig sein, um den Gesundheitszustand der Person beurteilen zu können.

Die Trinkmotivation kann ein allgemeiner "Trinkspruch" sein, wobei beispielsweise individuell auf die Person abgestimmte Motivationssprüche ausgegeben werden können. Die Trinkmotivation dient daher ebenso dazu, die Person daran zu erinnern, immer wieder zu trinken. Die Trinkmotivation kann daher auch als eine Art Trinkempfehlung verstanden werden, wobei beispielsweise eine Menge angegeben werden kann, die getrunken werden soll. So kann ein Motivationsspruch basierend auf der Differenz zwischen Istmenge Trinken und Sollmenge Trinken ausgeben werden.

So kann beispielsweise akustisch ein Lob oder Motivationsspruch abgegeben werden. Alternativ oder zusätzlich kann eine optische Anzeige die getrunkene Menge von heute, das Trinkziel und die getrunkene Menge der letzten 7 Tage anzeigen. Eine Erfolgsanzeige kann mit einem Pfeil darauf hinweisen, wie weit die Person von dem Trinkziel noch entfernt ist.

In einer Ausführungsform kann durch wiederholtes Wägen auch ermittelt werden, ob dem Trinkgefäß Flüssigkeit zugeführt wurde. Auch eine Veränderung des Gewichts, bei welcher eine Zunahme des Gewichts in dem Trinkgefäß festgestellt wird, kann dadurch bei Ermittlung der Trinkmenge berücksichtigt werden. Dabei kann beispielweise erkannt werden, dass das Trinkgefäß erneut aufgefüllt wurde, und welche Menge nach dem Auffüllen wieder aus dem Trinkgefäß getrunken wurde. Demnach erfolgt insbesondere die Ermittlung eines Differenzwertes zwischen zwei Gewichtswerten.

Die Aufzeichnungen von Veränderungen des Gewichts können in einer Datenbank oder einer Datendatei abgespeichert werden. Die in der Datenbank bzw. Datendatei gespeicherten Daten können mittels einer Tabelle, insbesondere einer Exceltabelle dargestellt bzw. ausgelesen werden. So kann direkt an dem Trinkassistenzsystem ausgelesen werden, welche Person, wie viel am Tag oder in einem gewissen Zeitraum getrunken hat. Die Tabelle kann beispielsweise Werte wie den Namen der Personen, eine jeweils gemessene Differenz, Tageszeit und dergleichen aufweisen.

Bei der Wägeeinrichtung kann es sich insbesondere um eine Wägezelle, insbesondere mit einer Wägebrücke, handeln. Als Recheneinrichtung kann beispielsweise ein Mini-Computer eingesetzt werden, wie insbesondere einem Raspberry Pi. Die Ausgabeeinrichtung kann beispielsweise ein Display und/oder einen Lautsprecher aufweisen, um eine akustische sowie optische Trinkempfehlung ausgeben zu können.

Eine Differenz zwischen einem Leergewicht des Trinkgefäßes und dem gefüllten Trinkgefäß kann anhand von SQL-Befehlen in einer Datenbank umgesetzt werden. Die Datenbank kann in der Auswerteeinrichtung gespeichert bzw. abgelegt sein. Die Auswerteeinrichtung kann eine Recheneinrichtung aufweisen. Weiterhin kann die Auswerteeinrichtung als Raspberry Pi ausgebildet sein.

Die Wägeeinrichtung, die Auswerteeinrichtung, die Ausgabeeinrichtung und die Speichereinrichtung können in einem Gehäuse gelagert sein, und dadurch vor eintretender Feuchtigkeit geschützt sein. Dies bietet Vorteile, wenn das Trinkgefäß nicht ordnungsgemäß angestellt wird und Flüssigkeit entweicht. Eine Beschädigung der Komponenten kann dadurch verhindert werden.

Das Trinkassistenzsystem kann ein Gehäuse umfassen, das bevorzugt über ein 3D-Druckverfahren hergestellt werden kann. Als Material kann ein Kunststoffmaterial eingesetzt werden. Bevorzugt kann ein synthetisches Polymere wie insbesondere Polylactide (PLA) eingesetzt werden.

Das Gehäuse kann auf einer Oberseite eine ebene Abstellfläche aufweisen, auf welche das Trinkgefäß abgestellt werden kann.

Das Trinkassistenzsystem kann beispielsweise aus einem quadratischen oder rechteckigen Körper ausgebildet sein, der kompakte Maße aufweist. So kann eine Grundfläche des Trinkassistenzsystem beispielsweise Seitenkanten mit einer Länge von 100-140 mm aufweisen, insbesondere 110-120 mm, bevorzugt etwa 115 mm. So kann eine ausreichend große Abstellfläche für ein Trinkgefäß bereitgestellt werden.

Das Trinkassistenzsystem kann beispielsweise als quaderförmiger oder rechteckförmiger Körper ausgebildet sein, und eine Höhe von 50-80 mm, bevorzugt 60 mm, aufweisen.

Des Weiteren kann ein Stromanschluss an dem Gehäuse vorgesehen sein, um das Trinkassistenzsystem mit Energie zu versorgen. Ebenso ist bevorzugt eine Antenne, wie insbesondere eine Kupferantenne, in dem Gehäuse vorgesehen, sodass über ein magnetisches bzw. elektromagnetisches Feld der Kupferantenne der entsprechende RFID-Chip an dem Trinkgefäß identifiziert werden kann.

Weiterhin kann ein Lüfterelement vorgesehen sein, dass in dem Gehäuse angeordnet ist. Dadurch können die in dem Gehäuse vorgesehenen Komponenten ausreichend gekühlt werden.

Vorteilhafte Ausgestaltungen und Weiterbildungen ergeben sich aus den weiteren Unteransprüchen sowie aus der Beschreibung unter Bezugnahme auf die Figuren der Zeichnung.

In einer vorteilhaften Ausführungsform kann das Identifikationselement, insbesondere ein RFID-Chip, an dem Trinkgefäß, insbesondere am Boden des Trinkgefäßes, angebracht werden. Dadurch kann bei Abstellen des Trinkgefäßes auf eine Abstellfläche des Trinkassistenzsystems das Trinkgefäß einer Person zugeordnet werden. Durch Identifikation von unterschiedlichen Trinkgefäßen können dabei entweder mehrere Trinkgefäße einer Person, oder auch Trinkgefäße verschiedener Personen analysiert werden. So kann mit dem Verfahren bzw. mit dem Trinkassistenzsystem mit nur einem Gerät das Trinkverhalten von mehreren Personen aufgezeichnet werden.

Eine Datenübertragung wird insbesondere durch ein magnetisches bzw. elektromagnetisches Feld durch eine Kupferantenne ermöglicht, welche den passiven RFID-Chip am Becherboden bzw. Boden des Trinkgefäßes kurzzeitig mit Energie versorgt.

In einer vorteilhaften Ausführungsform können mehrere Kategorien von Trinkmotivationen für verschiedene Differenzen in einem Datenordner abgelegt sein und eine Trinkmotivation aus der jeweils zu der ermittelten Differenz passenden Kategorie zur Ausgabe ausgewählt werden. Der Datenordner kann beispielsweise in der Auswerteeinrichtung und/oder einer Recheneinrichtung hinterlegt sein. Der Datenordner kann ebenso als eine Art Datenbank ausgeführt sein, in welcher unterschiedliche Motivationssprüche kategorisiert hinterlegt sind.

In derselben oder einer weiteren Datenbank bzw. einem weiteren Datenordner kann eine individuell getrunkene Menge einer Person mit Uhrzeit und Datum abgespeichert werden. In der Datenbank bzw. in dem Datenordner können weiterhin sämtliche relevante Informationen über die entsprechende Person hinterlegt sein, wie insbesondere eine Soll-Trinkmenge pro Tag. Die Inhalte der Datenbank bzw. des Datenordners können in einer Excel-Datei angezeigt werden, Beispielsweise über SQL-Befehle.

In einer vorteilhaften Ausführungsform kann ein Aufzeichnen von Veränderungen des Gewichts des in dem Trinkgefäß aufgenommenen Getränks mittels einer Speichereinrichtung erfolgen. Die Speichereinrichtung kann ebenso Teil der Auswerteeinrichtung sein, und beispielsweise den Datenordner bzw. die Datenbank aufweisen.

In einer vorteilhaften Ausführungsform kann die Auswerteeinrichtung eine Recheneinrichtung umfassen. So kann die Auswerteeinrichtung beispielsweise als Minicomputer, insbesondere als Raspberry Pi, ausgeführt sein. Dort kann auch die Datenbank bzw. der Datenordner mit den Motivationssprüchen und/oder den persönlichen Daten hinterlegt sein. Als Datenbank kann insbesondere MySQL verwendet werden. Die Programmierung kann über ein Python Skript erfolgen.

In einer vorteilhaften Ausführungsform kann eine Trinkmotivation aus den mehreren Trinkmotivationen innerhalb der passenden Kategorie zufällig ausgewählt werden. So kann die Kategorie zum einen entsprechend einer bestimmten Person ausgewählt werden. Alternativ oder zusätzlich kann die Uhrzeit zur Auswahl der passenden Kategorie eine Rolle spielen.

In einer vorteilhaften Ausführungsform kann die Trinkmotivation akustisch mittels einer Tonausgabeeinrichtung ausgegeben werden. So kann beispielsweise akustisch eine Aussage wie "Hallo (Name der Person). Die getrunkene Menge beträgt (Wert). Sie sind noch (Wert) von ihrem Trinkziel entfernt", erfolgen. Die akustische Trinkempfehlung kann beispielsweise dann ausgegeben werden, wenn das Trinkgefäß auf dem Trinkassistenzsystem abgestellt wird. Des Weiteren kann die akustische Trinkempfehlung über den Tag verteilt wiederholt ausgegeben werden, wenn der Becher zu lange auf dem Trinkassistenzsystem abgestellt ist und nicht bewegt wird. Um die Person zum Trinken zu animieren, kann eine eingesprochene Sprachausgabe mit einer vertrauten Stimme, wie einer Person aus der Familie, wiedergegeben werden. Es können auch Sprüche aus einer Datenbank per Zufall ausgewählt werden, um Abwechslung für die Person zu bieten und diese zum Trinken zu animieren. Ebenso kann ein Lob ausgegeben werden, wenn das Trinkgefäß mit einer geringeren Menge an Flüssigkeit als zuvor auf dem Trinkassistenzsystem abgestellt wurde.

In einer vorteilhaften Ausführungsform kann die Trinkempfehlung mittels eine Bildausgabeeinrichtung angezeigt werden. So kann beispielsweise auf einer grafischen Oberfläche folgende Texteinheit angezeigt werden "Hallo (Name der Person), (getrunkene Menge), (Trinkziel pro Tag), (Durchschnitt der letzten 7 Tage)." Über eine grafische Darstellung, wie insbesondere einen Pfeil, kann unter Anwendung einer entsprechenden Farbgebung, wie insbesondere in grün und rot, angezeigt werden, wie weit man noch von einem entsprechenden Trinkziel entfernt ist. Die grafische Darstellung kann beispielsweise dann aktiviert werden, wenn das Trinkgefäß auf dem Trinkassistenzsystem abgestellt wird. Bevorzugt weist das Trinkassistenzsystem eine Abstellfläche auf, in welcher auch die Bildausgabeeinrichtung integriert ist. Bevorzugt kann die grafische Darstellung auch dann optisch wahrgenommen werden, wenn sich das Trinkgefäß auf der Abstellfläche befindet. So kann alternativ oder zusätzlich eine Projektionseinheit vorgesehen sein, durch welche eine optische Trinkempfehlung auf den Boden, oder eine benachbarte Wand, projiziert werden kann. So kann ein optisch sich bewegendes Bild in beliebiger Größe abgegeben werden, das auch von Personen erkannt werden kann, die eine Sehschwäche, insbesondere eine altersbedingte Sehschwäche, aufweisen.

In einer vorteilhaften Ausführungsform kann mittels der Bildausgabeeinrichtung eine Darstellung der ermittelten Trinkmenge sowie der Differenz zur Sollmenge angezeigt werden. Dies kann insbesondere grafisch durch entsprechende Farbgebung, wie ein grüner und roter Bereich, erfolgen. Über einen Pfeil, der sich im grünen oder im roten Bereich, oder in einem Bereich dazwischen befindet, kann angezeigt werden, inwieweit das Trinkziel bereits erreicht wurde.

In einer vorteilhaften Ausführungsform kann mittels der Bildausgabeeinrichtung ein Durchschnitt der ermittelten Trinkmenge der letzten 7 Tage und/oder eine Erfolgsanzeige, insbesondere gekennzeichnet durch eine Pfeilrichtung, angezeigt werden. Ebenso kann die Trinkmenge über den Zeitraum einer gewissen Anzahl von Tagen, wie beispielsweise zwischen 2 und 7 Tagen, ermittelt und angezeigt werden.

In einer vorteilhaften Ausführungsform kann die Bildausgabeeinrichtung ein Display umfassen, auf dessen Oberfläche das Trinkgefäß zum Wägen abgestellt wird. Dadurch wird das Display immer dann wahrgenommen, wenn das Trinkgefäß auf dem Trinkassistenzsystem abgestellt wird. Folglich wird die Person das Display optisch wahrnehmen, und einen Blick darauf werfen. Dies kann insbesondere hervorgehoben werden, wenn eine Animation oder eine gewisse Farbgebung auf dem Display angezeigt wird. Das Display kann mit einer Abdeckung, wie einer Plexiglasschiebe oder einer Glasschiebe, vor Beschädigungen und vor Feuchtigkeit geschützt sein. Die Abdeckung kann eine Dicke von 2-5 mm, insbesondere 4 mm aufweisen.

Die Erfindung betrifft weiterhin ein Trinkassistenzsystem. Das Trinkassistenzsystem ist insbesondere zur Durchführung des erfindungsgemäßen Verfahrens ausgebildet, deshalb die beschriebenen Merkmale und Vorteile des Verfahrens ebenso für das Trinkassistenzsystem gelten.

In einer vorteilhaften Ausführungsform kann ein zur Anbringung an einem Trinkgefäß ausgebildetes Identifikationselement, insbesondere ein RFID-CHIP, vorgesehen sein, wobei in der Speichereinrichtung eine dem Identifikationselement zugeordnete Sollmenge hinterlegbar ist. Dabei kann die Trinkmenge für verschiedene Personen angepasst werden, wenn die unterschiedlichen Personen Becher mit unterschiedlich codierten RFID-Chips zur Identifikation aufweisen.

In einer vorteilhaften Ausführungsform kann die Ausgabeeinrichtung eine Tonausgabeeinrichtung aufweisen. So kann beispielsweise zumindest ein Lautsprecher integriert sein, der beispielsweise bei Aufstellen eines Trinkgefäßes auf das Trinkassistenzsystem aktiviert werden kann.

In einer vorteilhaften Ausführungsform kann eine akustische Eingabeeinrichtung vorgesehen sein, die zum Einsprechen von für ein Identifikationselement individuellen Trinkmotivationen durch einen Benutzer in die Datenbank ausgebildet ist, oder es kann eine Trinkmotivation als eine Audiodatei in der Auswerteeinrichtung abgespeichert sein. So kann beispielsweise über ein Mikrofon eine Audiospur eingesprochen werden und als Audiodatei in einem Datenordner bzw. in der Datenbank auf der Recheneinrichtung, wie insbesondere einem Raspberry Pi, abgespeichert werden.

In einer vorteilhaften Ausführungsform kann die Auswerteeinrichtung eine Recheneinrichtung umfassen, die zur Ermittlung eines aufgezeichneten Gewichts des in dem Trinkgefäß aufgenommenen Getränks als ermittelbare Trinkmenge sowie einer Differenz zu einer vorbestimmten Sollmenge ausgebildet ist. Die Recheneinrichtung kann als Minicomputer, insbesondere als Raspberry Pi, ausgeführt sein. Über ein Python-Skript kann die Programmierung erfolgen. Als Datenbank kann beispielsweise MySQL verwendet werden.

In einer vorteilhaften Ausführungsform kann die Ausgabeeinrichtung eine Bildausgabeeinrichtung aufweisen, die zur Anzeige der Trinkempfehlung ausgebildet ist. Die Bildausgabeeinrichtung kann als eine Art Display in dem Trinkassistenzsystem integriert sein. Des Weiteren kann eine Projektionseinheit vorgesehen sein, durch welche eine optische Trinkempfehlung auf den Boden, oder eine benachbarte Wand, projiziert werden kann.

In einer vorteilhaften Ausführungsform kann die Bildausgabeeinrichtung zur Anzeige der aktuell ermittelten Trinkmenge sowie der Differenz zu der Sollmenge ausgebildet sein, und insbesondere zur Anzeige eines Durchschnitts der ermittelten Trinkmenge der letzten 7 Tage und/oder einer Erfolgsanzeige. Dadurch kann just-in-time ein Zielwert und ein aktueller Status Quo angezeigt werden.

In einer vorteilhaften Ausführungsform kann die Bildausgabeeinrichtung ein Display umfassen, dessen Oberfläche auch als eine Aufnahmefläche der Wägeeinrichtung ausgebildet ist, auf der das Trinkgefäß zum Wägen abstellbar ist. So kann über dem Display beispielsweise eine Abdeckung vorgesehen sein, die insbesondere durchsichtig ausgeführt ist. Beispielsweise kann eine Plexiglasscheibe oder eine Glasscheibe als Abstellfläche dienen, wobei unterhalb der Plexiglasscheibe bzw. der Glasscheibe ein Display und die Wägeeinrichtung, umfassend insbesondere eine Wägezelle und eine Wägebrücke, vorgesehen ist. So sind das Display und die Wägeeinrichtung vor Verunreinigungen und Beschädigungen geschützt, kann jedoch bei Abstellen des Trinkgefäßes direkt als Bildanzeige wahrgenommen bzw. direkt als Aufnahmefläche zum Wägen genutzt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: ein Gehäuse eines Trinkassistenzsystems;
- Fig. 2: das Gehäuse aus Fig. 1 in zwei Ansichten;
- Fig. 3: ein Basiselement eines Trinkassistenzsystems;
- Fig. 4: das Basiselement aus Fig. 3 in zwei Seitenansichten;
- Fig. 5: ein Wägebrücke eines Trinkassistenzsystems;
- Fig. 6: eine Elektronikeinheit eines Trinkassistenzsystems;
- Fig. 7: die Elektronikeinheit aus Fig. 6 in weiteren Ansichten;
- Fig. 8: Trinkgefäß auf einem Trinkassistenzsystem;
- Fig. 9: eine optische Darstellung zur Anzeige einer Trinkempfehlung,
- Fig. 10: eine schematische Darstellung einer möglichen Ausführungsform des Verfahrens;
- Fig. 11: eine schematische Darstellung einer weiteren möglichen Ausführungsform des Verfahrens.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

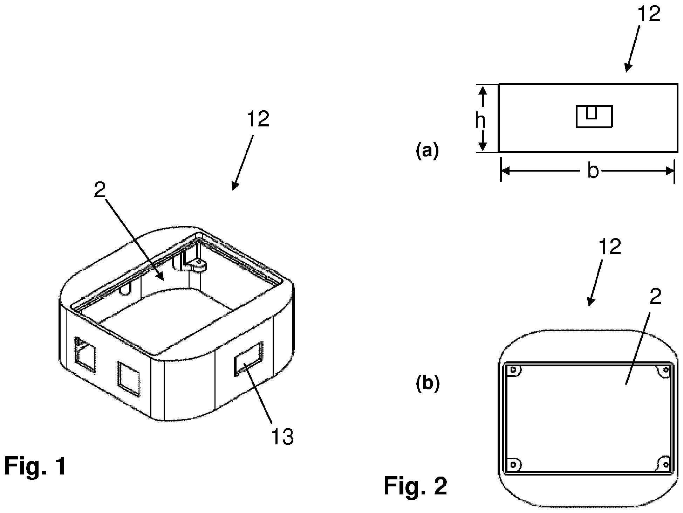

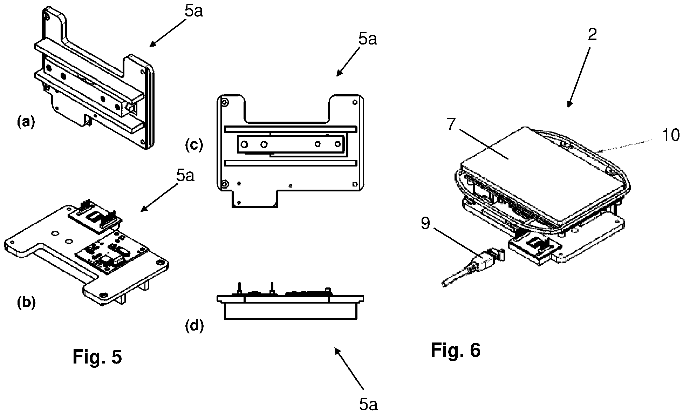

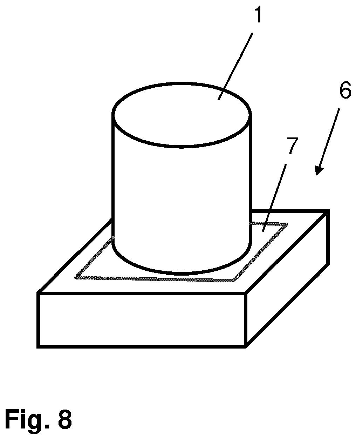

Fig. 1 zeigt ein Gehäuse 12 eines Trinkassistenzsystems 6 in einer möglichen Ausführungsform. Das Gehäuse 12 weist eine ebene Oberfläche auf, in welcher eine Öffnung vorgesehen ist. In der Öffnung, die insbesondere quadratische oder rechteckige ausgebildet ist, kann eine Bildausgabeeinrichtung 2 und eine Wägeeinrichtung 5 eingebracht werden, sodass eine optische Widergabe auf einer Abstellfläche des Trinkassistenzsystem 6 erzeugt und eine Aufnahmefläche zum Wägen des Trinkgefäßes bereitgestellt werden kann. Seitlich an dem Gehäuse 12 sind Öffnungen 13 vorgesehen, die lediglich temporär ausgebildet sind. Nach Anordnung einer Elektronikeinheit, wie beispielsweise in Figur 6 gezeigt, können die Öffnungen 13 verschlossen werden. Dadurch kann durch das Gehäuse 12 eine Ausführungsform wie in Figur 8 dargestellt, umgesetzt werden, welche ein Trinkassistenzsystem 6 mit einem geschlossenen Gehäuse aufzeigt, bei welchem auf der Oberseite eine Bildausgabeeinrichtung 2 erkennbar ist.

In Fig. 2 ist das Gehäuse 12 aus Fig. 1 in einer Seitenansicht, Fig. 2 (a), und einer Draufsicht, Fig. 2 (b), gezeigt. Die Seitenkanten, gekennzeichnet durch die Breite b, können beispielsweise Abmessungen zwischen 100 und 140 mm, bevorzugt 115 mm, aufweisen. Dadurch kann ein kompaktes Gehäuse bereitgestellt werden, in welcher beispielsweise ein Mini-Computer angeordnet werden kann.

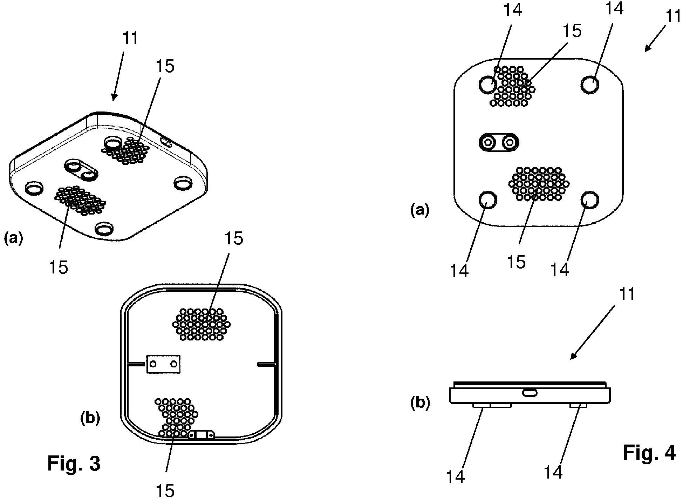

Fig. 3 zeigt ein Basiselement 11 eines Trinkassistenzsystems 6 in einer möglichen Ausführungsform. Das Basiselement 11 kann ein Bodenelement des Gehäuses 12 ausbilden, sodass ein in sich geschlossenes Gehäuse ausgeformt wird. Dadurch kann die in dem Gehäuse angeordnete Elektronik, insbesondere bestehend aus Bildausgabeeinrichtung, Auswerteeinrichtung sowie Tonausgabeeinrichtung und Wegeeinrichtung, vor eintretender Feuchtigkeit geschützt werden. Dies ist insbesondere daher wichtig, da auf dem Trinkassistenzsystem 6 ein Trinkgefäß 1, wie in Figur 8 gezeigt, abgestellt wird. Das Gehäuse 12 ist demnach bevorzugt wasserdicht ausgeführt.

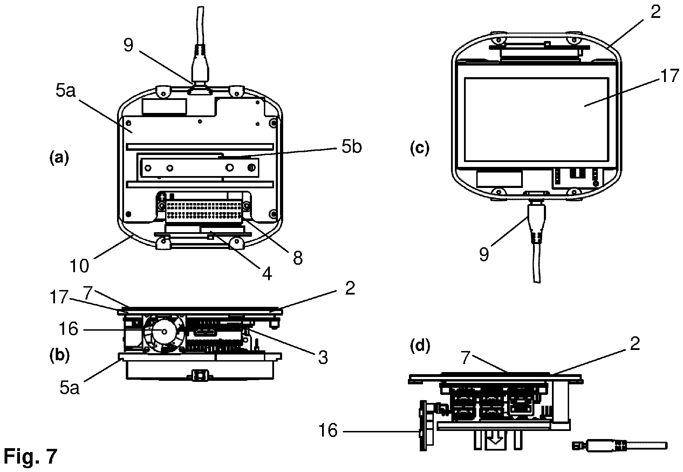

In Fig. 4 sind zwei Seitenansichten des Basiselements 11 aus Fig. 3 gezeigt. Da das Basiselement 11 eine Bodenseite des Gehäuses ausbilden kann, können an der Bodenseite Öffnungen 15 zur Ausgabe eines akustischen Signals angeordnet werden, wie in Fig. 3 (a), 3 (b) und 4 (a) zu erkennen, die vor Feuchtigkeit geschützt angeordnet sind. In dem Gehäuse kann weiterhin ein Lüfter vorgesehen sein, wie in Fig. 7 gezeigt. So können die Öffnungen 15 ebenso zur Luftzufuhr in das Gehäuse und/oder zur Luftabfuhr aus dem Gehäuse dienen.

In der Fig. 4 (a) sind an der Unterseite des Basiselements 11 vier Standfüße 14 erkennbar, durch welche gewährleistet wird, dass die Öffnungen 15 vor eintretender Feuchtigkeit beabstandet zum Boden angeordnet sind, wenn das Trinkgefäß nicht sachgemäß auf dem Trinkassistenzsystem 6 abgestellt wird.

Fig. 5 zeigt eine Wägebrücke 5a eines Trinkassistenzsystems 6 in einer möglichen Ausführungsform. Diese kann wie in Figur 7 dargestellt in einer Elektronikeinheit integriert angeordnet werden.

Fig. 6 zeigt eine Elektronikeinheit eines Trinkassistenzsystems 6 in einer möglichen Ausführungsform. Die Elektronikeinheit kann wie dargestellt in dem Gehäuse, bestehend aus dem Gehäuse 12 und dem Basiselement 11, integriert bzw. angeordnet werden. Eine Bildausgabeeinrichtung 2 ist hinter einer Abdeckung 7 angeordnet, sodass die Bildausgabeeinrichtung 2 vor Feuchtigkeit und Beschädigung geschützt angeordnet werden kann. Bei der Bildausgabeeinrichtung kann sich insbesondere um ein Display 17 handeln, siehe Fig. 7, das hinter einer Plexiglasscheibe bzw. einer Glasscheibe angeordnet werden kann. Die dargestellte Abdeckung 7 kann dabei in die Öffnung des Gehäuses 12, wie in Figur 1 dargestellt, eingesteckt werden. Insbesondere ist eine Dichtung zwischen der Abdeckung 7 und dem Gehäuse 12 vorgesehen, sodass keine Feuchtigkeit durchdringen kann. Ebenso kann die Abdeckung 7 bzw. die Plexiglasscheibe eingeklebt werden, insbesondere ohne Dichtung. Des Weiteren ist ein Stromanschluss 9 vorgesehen, sowie eine Antenne 10, die insbesondere als Kupferantenne ausgebildet ist. Über die Antenne 10 kann über ein magnetisches bzw. elektromagnetisches Feld ein RFID-Chip, der an einem Trinkgefäß 1 angeordnet ist, ausgelesen werden. Der RFID-Chip wird dabei kurzfristig mit Strom versorgt, und kann daher identifiziert werden.

In Fig. 7 ist die Elektronikeinheit aus Fig. 6 in zwei weiteren Ansichten gezeigt. Die Wägeeinrichtung 5 weist eine Wägebrücke 5A sowie eine Wägezelle 5B auf und ist unterhalb der Auswerteeinrichtung angeordnet, die eine Recheneinrichtung 3 umfassen kann. Die Recheneinrichtung 3 kann insbesondere als Mini-Computer, wie beispielsweise ein Raspberry Pi, ausgeführt sein. Oberhalb der Recheneinrichtung 3 ist die Bildausgabeeinrichtung 2 angeordnet, die beispielsweise ein Display 17 umfassen kann. Zum Schutz der elektronischen Komponenten ist eine Abdeckung 7 vorgesehen, die oberhalb der Bildausgabeeinrichtung 2 angeordnet ist und eine Abstellfläche für ein Trinkgefäß 1 ausbildet. Es kann weiterhin eine Tonausgabeeinrichtung 4 vorgesehen sein, über welche eine akustische Ausgabe erfolgen kann. Die einzelnen Komponenten können über eine Pinleiste 8 miteinander Beziehung weise nebeneinander fixiert werden. Ebenso kann ein Lüfter 16 umfasst sein, um die Elektronikeinheit ausreichend zu kühlen.

Fig. 8 zeigt ein Trinkgefäß 1 abgestellt auf einem Trinkassistenzsystem 6. Die Abdeckung 7 bildet dabei eine Abstellfläche für das Trinkgefäß 1 aus. Gleichzeitig kann da Trinkgefäß gewogen werden, wenn es auf der Abstellfläche 7 abgestellt ist. Das Trinkassistenzsystem 6 ist quaderförmig ausgebildet, sodass insbesondere auf der Oberfläche eine Ebene Abstellfläche ausgeformt wird. Dies gewährleistet ein sicheres Abstellen des Trinkgefäßes 1.

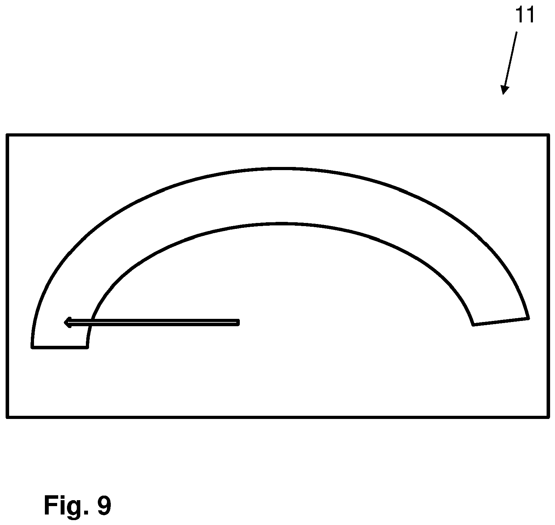

Fig. 9 zeigt eine optische Darstellung zur Anzeige einer Trinkempfehlung. Diese kann beispielsweise in einer Bildausgabeeinrichtung 2 dargestellt werden. Der Bogen kann im rechten Bereich grün und im linken Bereich rot eingefärbt sein. Über den Pfeil kann der Bereich des persönlichen Trinkzieles gekennzeichnet werden, im roten Bereich (zu wenig getrunken) oder im grünen Bereich (genug getrunken). Die Position des Pfeiles kann bei jeder getrunkenen Menge angepasst werden, sodass von der Person gleich ein Erfolgt festgestellt werden kann. Insbesondere wird das Trinkgefäß nach dem Trinken nicht erneut drauf gestellt. Bevorzugt wird das Trinkgefäß nur dann erneut darauf abgestellt, wenn die Menge erneut getrunken werden soll.

In einer weiteren Ausführung kann das Trinkgefäß beispielsweise nach dem Trinken auf dem Trinkassistenzsystem abgestellt werden, so kann das entsprechende Ergebnis nach dem Wägen angezeigt werden. Des Weiteren kann neben der Darstellung die getrunkene Menge, insbesondere am bisherigen Tag, ein Trinkziel pro Tag und/oder ein Durchschnittswert der Trinkmenge der letzten 7 Tage in Textform angezeigt werden.

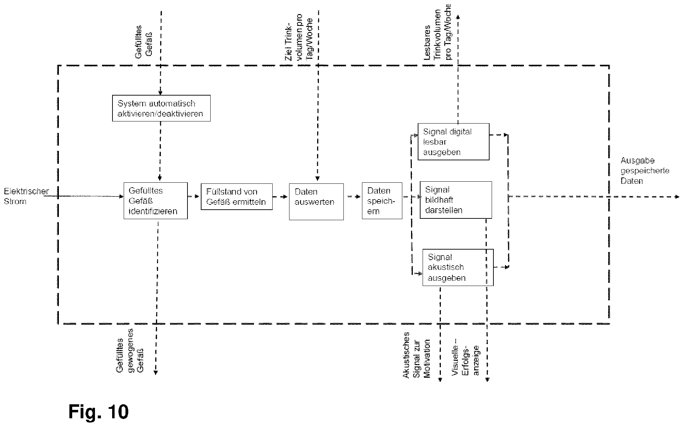

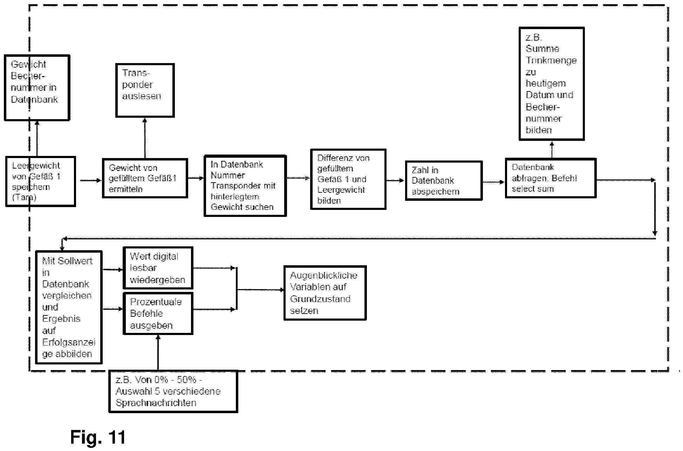

Die Figuren 10 und 11 zeigen schematische Darstellungen möglichen Ausführungsformen des Verfahrens.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Soll kann die Bildausgabeeinrichtung 2 beispielsweise eine Projektionseinrichtung aufweisen, durch welche eine optische Ausgabe auf den Bodenbereich oder eine benachbarte Wand ausgegeben werden kann. Des Weiteren kann eine akustische Eingabeeinrichtung vorgesehen sein, die zum Einspeichern von individuellen Spuren für individuelle Trinkempfehlungen bzw. Trinkmotivationen ausgebildet ist.

### Bezugszeichenliste

- 1: Trinkgefäß
- 2: Bildausgabeeinrichtung
- 3: Recheneinrichtung
- 4: Tonausgabeeinrichtung
- 5: Wägeeinrichtung
- 6: Trinkassistenzsystem
- 7: Abdeckung
- 8: Pinleiste
- 9: Stromanschluss
- 10: Antenne
- 11: Basiselement
- 12: Gehäuse
- 13: Öffnung
- 14: Standfuß
- 15: Öffnung
- 16: Lüfter
- 17: Display
- h: Höhe
- b: Breite

## Patentansprüche

1. Verfahren zur Ansteuerung einer Ausgabevorrichtung in einem Trinkassistenzsystem, mit den folgenden Schritten:
Erkennen eines an einem Trinkgefäß (1) angebrachten Identifikationselements mittels einer Identifikationseinrichtung;
Wiederholtes Wägen des Trinkgefäßes (1) mittels einer Wägeeinrichtung (5) zur Erfassung eines Gewichts eines in dem Trinkgefäß (1) aufgenommenen Getränks;
Ermitteln einer Trinkmenge aus aufgezeichneten Veränderungen des Gewichts und/oder einer Differenz zu einer dem Identifikationselement zugeordneten vorbestimmten Sollmenge mittels einer Auswerteeinrichtung; und
Ausgeben einer Trinkmotivation durch eine Ausgabeeinrichtung basierend auf der Differenz.

2. Verfahren nach Anspruch 1,
**dadurch gekennzeichnet,**
**dass** das Identifikationselement, insbesondere ein RFID-Chip, an dem Trinkgefäß (1), insbesondere am Boden des Trinkgefäßes (1), angebracht wird.

3. Verfahren nach einem der vorstehenden Ansprüche,
**dadurch gekennzeichnet,**
**dass** mehrere Kategorien von Trinkmotivationen für verschiedene Differenzen in einem Datenordner abgelegt sind und eine Trinkmotivation aus der jeweils zu der ermittelten Differenz passenden Kategorie zur Ausgabe ausgewählt wird.

4. Verfahren nach Anspruch 1, 2 oder 3,
**dadurch gekennzeichnet**,
ein Aufzeichnen von Veränderungen des Gewichts des in dem Trinkgefäß (1) aufgenommenen Getränks mittels einer Speichereinrichtung erfolgt.

5. Verfahren nach einem der vorstehenden Ansprüche,
**dadurch gekennzeichnet,**
**dass** die Trinkmotivation akustisch mittels einer Tonausgabeeinrichtung (4) ausgegeben wird und/oder mittels eine Bildausgabeeinrichtung (2) angezeigt wird.

6. Verfahren nach einem der vorstehenden Ansprüche,
**dadurch gekennzeichnet,**
**dass** die Auswerteeinrichtung eine Recheneinrichtung (3) umfasst.

7. Verfahren nach Anspruch 5,
**dadurch gekennzeichnet,**
**dass** mittels der Bildausgabeeinrichtung (2) eine Darstellung der ermittelten Trinkmenge sowie der Differenz zur Sollmenge angezeigt wird.

8. Verfahren nach Anspruch 5 oder 7,
**dadurch gekennzeichnet,**
**dass** mittels der Bildausgabeeinrichtung (2) ein Durchschnitt der ermittelten Trinkmenge der letzten 7 Tage und/oder eine Erfolgsanzeige, insbesondere **gekennzeichnet durch** eine Pfeilrichtung, angezeigt wird.

9. Verfahren nach Anspruch 5, 7 oder 8,
**dadurch gekennzeichnet,**
**dass** die Bildausgabeeinrichtung (2) ein Display umfasst, auf dessen Oberfläche das Trinkgefäß (1) zum Wägen abgestellt wird.

10. Trinkassistenzsystem (3), insbesondere zur Durchführung eines Verfahrens gemäß einem der vorstehenden Ansprüche, mit:
einer Identifikationsvorrichtung, die zur Erkennung eines an ein Trinkgefäß (1) anbringbaren Identifikationselements ausgebildet ist;
einer Wägeeinrichtung (5), die zur Erfassung eines Gewichts eines in dem Trinkgefäß (1) aufgenommenen Getränks ausgebildet ist;
einer Speichereinrichtung, die zum Aufzeichnen der Veränderung des Gewichts des in dem Trinkgefäß (1) aufgenommenen Getränks ausgebildet ist;
einer Auswerteeinrichtung, in der mehrere Kategorien hinterlegt sind, wobei eine individuell getrunkene Menge mit Zeitangabe abgelegt ist.

11. Trinkassistenzsystem nach Anspruch 10,
**dadurch gekennzeichnet,**
**dass** ein zur Anbringung an einem Trinkgefäß (1) ausgebildetes Identifikationselement, insbesondere ein RFID-CHIP, vorgesehen ist, wobei in der Speichereinrichtung eine dem Identifikationselement zugeordnete Sollmenge hinterlegbar ist.

12. Trinkassistenzsystem nach Anspruch 10 oder 11,
**dadurch gekennzeichnet,**
**dass** die Ausgabeeinrichtung eine Tonausgabeeinrichtung (4) und/oder eine Bildausgabeeinrichtung (2), die zur Anzeige der Trinkmotivation ausgebildet ist, aufweist.

13. Trinkassistenzsystem nach Anspruch 12,
**dadurch gekennzeichnet,**
**dass** eine akustische Eingabeeinrichtung vorgesehen ist, die zum Einsprechen von für ein Identifikationselement individuellen Trinkmotivationen durch einen Benutzer in eine Datenbank ausgebildet ist, oder dass eine Trinkmotivation als eine Audiodatei in der Auswerteeinrichtung abgespeichert ist.

14. Trinkassistenzsystem nach einem der Ansprüche 10 bis 13, **dadurch gekennzeichnet,**
**dass** die Auswerteeinrichtung eine Recheneinrichtung (3) umfasst, die zur Ermittlung eines aufgezeichneten Gewichts des in dem Trinkgefäß (1) aufgenommenen Getränks als ermittelbare Trinkmenge sowie einer Differenz zu einer vorbestimmten Sollmenge ausgebildet ist.

15. Trinkassistenzsystem nach Anspruch 12,
**dadurch gekennzeichnet,**
**dass** die Bildausgabeeinrichtung (2) zur Anzeige der aktuell ermittelten Trinkmenge sowie der Differenz zu der Sollmenge ausgebildet ist, und insbesondere zur Anzeige eines Durchschnitts der ermittelten Trinkmenge der letzten 7 Tage und/oder einer Erfolgsanzeige.

16. Trinkassistenzsystem nach Anspruch 12 oder 15,
**dadurch gekennzeichnet,**
**dass** die Bildausgabeeinrichtung (2) ein Display umfasst, dessen Oberfläche auch als eine Aufnahmefläche der Wägeeinrichtung ausgebildet ist, auf der das Trinkgefäß (1) zum Wägen abstellbar ist.
